# DEMANDE DE BREVET EUROPEEN

(11) **EP 0 666 429 A1**
(43) Date de publication de la demande: **09.08.1995**
(21) Numéro de dépôt: 94400214.6
(22) Date de dépôt: 01.02.1994
(51) Int. Cl.: F16B 41/00

(54) **Dispositif de retenue d'une vis sur une pièce moulée**

(71) Demandeur: ROCKWELL BODY AND CHASSIS SYSTEMS - FRANCE, en abrégé: ROCKWELL BCS - FRANCE, 92082 Paris La Défense 2 (FR)
(72) Inventeur: Prillard, Charles B., F-88360 Rupt sur Moselle (FR)
(74) Mandataire: Hasenrader, Hubert

(57) **Abrégé**

La présente invention concerne un dispositif de retenue d'une vis de fixation dans un alésage (2) d'une pièce moulée (1) en matériau synthétique, ladite vis (4) comportant une tête de vis (6) et une tige filetée (3) traversant ledit alésage (2) et se terminant par une pointe (11), caractérisé en ce qu'il comporte au moins une nervure (9) axiale formée dans la paroi (8) de la pièce (1) délimitant ledit alésage (2), ladite nervure (9) ayant la forme d'un coin, et convergeant vers l'axe géométrique (10) dudit alésage (2) dans la direction de la pointe (11) de la vis (4).

## Description

La présente invention concerne un dispositif de retenue d'une vis de fixation dans un alésage d'une pièce moulée en matériau synthétique qui est destinée à être fixée sur un support par ladite vis.

Afin de réduire les coûts de montage des équipements sur un véhicule automobile, il est souhaitable d'utiliser des systèmes de fixation rapides. Ceux-ci doivent de plus être économiques et très performants. Les systèmes de fixation par vis permettent de réaliser des assemblages stables dans le temps, malgré les variations de température, tout en étant démontables.

En fonction du positionnement de la pièce dans l'habitacle du véhicule, il peut être nécessaire de pré-positionner la vis dans l'alésage de la pièce à fixer, notamment si la pièce doit être fixée au pavillon, ce qui est le cas pour les embases des bras de support des pare-soleil. Dans ce cas, on peut utiliser des vis auto taraudeuses ou ayant un profil qui s'adapte à la matière constituant la pièce à fixer. Ces solutions nécessitent alors un outil de montage pour pré-positionner la vis. Cette opération peut entraîner l'éclatement de la pièce à fixer lorsque la vis provoque une tension excessive sur la pièce lors du taraudage.

Pour remédier à cet inconvénient, il est également connu de maintenir la vis dans un alésage de la pièce à l'aide d'une rondelle en carton et d'un clip métallique disposé du côté opposé à la tête de vis. Cette disposition nécessite le montage d'un élément supplémentaire avec un outillage approprié, et ne s'applique pas à tous les types de vis.

La présente invention a pour but de proposer un dispositif de retenue d'une vis de fixation dans l'alésage d'une pièce moulée qui ne nécessite pas un outillage spécial pour le pré-positionnement de la vis et qui soit d'un coût de revient modique.

L'invention concerne donc un dispositif de retenue d'une vis de fixation dans un alésage d'une pièce moulée en matériau synthétique, ladite vis comportant une tête de vis et une tige filetée traversant ledit alésage et se terminant par une pointe.

Ce dispositif est caractérisé en ce qu'il comporte au moins une nervure axiale formée dans la paroi de la pièce délimitant ledit alésage, ladite nervure ayant la forme d'un coin et convergeant vers l'axe géométrique dudit alésage dans la direction de la pointe de la vis.

Grâce à cette conception, l'opérateur peut enfoncer la tige filetée dans l'alésage en exerçant avec le doigt, une pression sur la tête de vis. La paroi conique de la nervure s'efface par déformation pour permettre l'enfoncement de la tige filetée. Elle exerce ensuite sur cette tige filetée une force radiale suffisante pour retenir la vis dans l'alésage quelle que soit la position de la pièce.

De préférence, l'épaisseur radiale de la nervure au niveau de l'embouchure d'entrée de l'alésage est suffisamment faible pour permettre une introduction facile de la pointe de vis dans cette embouchure. Cette épaisseur radiale croit dans la direction de la pointe de la vis.

De manière à augmenter la résistance de la nervure, l'épaisseur circonférentielle de celle-ci croit dans la direction de la pointe de la vis.

Avantageusement, la nervure s'étend sur sensiblement toute la profondeur de l'alésage et son angle de convergence est inférieur à 15°.

De préférence, il est prévu une pluralité de nervures régulièrement espacées sur la paroi délimitant l'alésage.

D'autres caractéristiques et avantages de l'invention ressortiront à la lecture de la description suivante faite à titre d'exemple non limitatif et en référence aux dessins annexés dans lesquels :

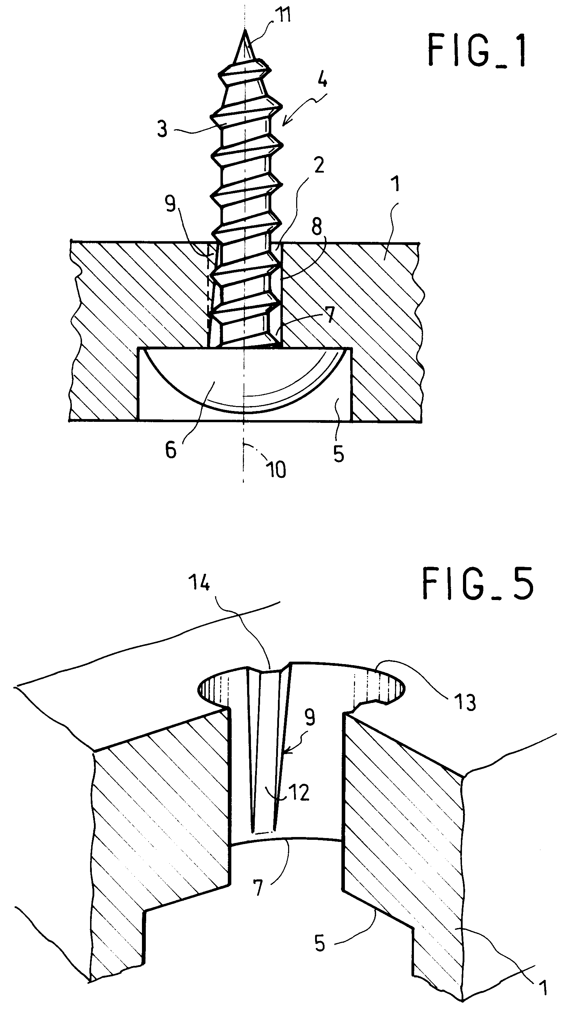

la figure 1 est une coupe axiale d'une vis retenue dans l'alésage d'une pièce par le dispositif de retenue selon l'invention,

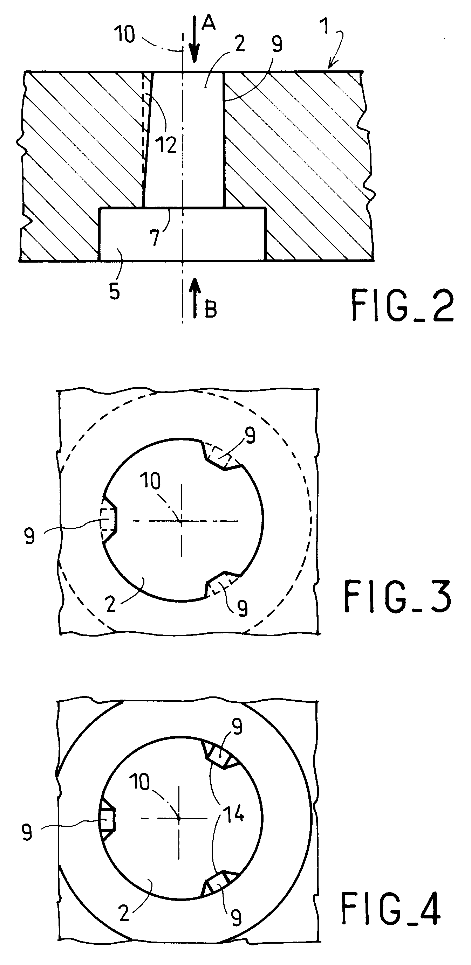

la figure 2 est une coupe axiale de la pièce de la figure 1 selon l'axe de l'alésage,
la figure 3 est une vue de dessus de la pièce de la figure 2 selon la flèche A,
la figure 4 est une vue de dessous de la pièce de la figure 2 selon la flèche B,
la figure 5 est une vue en perspective d'une nervure formée dans l'alésage.

Les dessins montrent une pièce moulée 1 en matériau synthétique qui présente un alésage 2 pour le passage de la tige filetée 3 d'une vis 4 du type vis à tôle, destinée à la fixation de ladite pièce 1 sur un support non représenté sur les dessins.
la pièce moulée 1 présente également un logement 5 pour la tête de vis 6 dans lequel débouche l'orifice d'entrée 7 de l'alésage 2. La tête de vis comporte de manière connue des moyens d'entraînement en rotation destinés à coopérer avec un tournevis.

La pièce moulée 1 peut être un carter d'un appareil ménager, ou un composant d'un véhicule automobile, tel qu'une embase de pare-soleil destinée a être fixée au pavillon. Il est préférable pour une bonne utilisation de l'invention, que l'alésage 2 ait une profondeur relativement grande par rapport à son diamètre, cette profondeur étant si possible au moins égale à la moitié de ce diamètre. Le diamètre de l'alésage 2 est au moins égal au diamètre extérieur de la tige filetée 3.

Selon l'invention, la paroi 8 délimitant l'alésage 2 présente une pluralité de nervures 9 axiales en forme de coin qui convergent vers l'axe géométrique 10 de l'alésage 2 dans la direction de la pointe 11 de la vis 4. Ces nervures 9, représentées au nombre de trois sur les dessins, présentent chacune une surface 12 inclinée d'un angle inférieur à 30° et de préférence inférieur à 15° par rapport à l'axe géométrique 10 et destinées à permettre le guidage de la tige filetée 3 après l'introduction de la pointe 11 dans l'embouchure d'entrée 7.

L'épaisseur de la nervure 9 croit dans la direction de la pointe 11. Au niveau de l'embouchure de sortie 13 de l'alésage 2, les nervures 9 forment ainsi des protubérances 14 dirigées vers l'axe 10 et qui exerçent sur la tige filetée des forces radiales qui maintiennent la vis 4 sur la pièce moulée 1.

L'épaisseur radiale des nervures 9 croit dans la direction de la pointe 11. Comme on le voit sur la figure 5, il n'est pas obligatoire que les nervures 9 s'étendent jusqu'à l'embouchure d'entrée 7. Toutefois, il est préférable que les nervures 9 s'étendent sur sensiblement toute la profondeur de l'alésage 2. Dans ce cas, l'épaisseur radiale des nervures 9 au niveau de l'embouchure d'entrée 7 est suffisamment faible pour ne pas gêner l'introduction de la pointe 11 de la vis 4 dans l'alésage 2.

Les nervures 9 sont réalisées dans le matériau constitutif de la pièce 1 et elles sont formées lors du moulage de cette pièce.

Lors de l'introduction de la vis 4 dans l'alésage 2, il est possible qu'une partie des protubérances 14 soient arrachées mais ceci ne gêne pas la fonction de retenue des nervures 9 du fait de leur grande dimension axiale.

Les nervures 9 peuvent se prolonger sur la face arrière de la pièce moulée 1 par des languettes flexibles, non représentées sur le dessin, qui s'écartent lors de l'introduction de la tige filetée 3 dans l'alésage 2.

## Revendications

1. Dispositif de retenue d'une vis de fixation dans un alésage (2) d'une pièce moulée (1) en matériau synthétique, ladite vis (4) comportant une tête de vis (6) et une tige filetée (3) traversant ledit alésage (2) et se terminant par une pointe (11), caractérisé en ce qu'il comporte au moins une nervure (9) axiale formée dans la paroi (8) de la pièce (1) délimitant ledit alésage (2), ladite nervure (9) ayant la forme d'un coin, et convergeant vers l'axe géométrique (10) dudit alésage (2) dans la direction de la pointe (11) de la vis (4).

2. Dispositif selon la revendication 1, caractérisé en ce que l'épaisseur circonférentielle de ladite nervure (9) croit dans la direction de la pointe (11) de la vis (4).

3. Dispositif selon l'une des revendications 1 et 2, caractérisé en ce que ladite nervure (9) s'étend sur sensiblement toute la profondeur de l'alésage (2).

4. Dispositif selon l'une quelconque des revendications 1 à 3, caractérisé en ce que l'angle de convergence de ladite nervure (9) est inférieur à 15°.

5. Dispositif selon l'une quelconque des revendications 1 à 4, caractérisé en ce qu'il comporte une pluralité de nervures (9) régulièrement espacées sur la paroi (8) délimitant l'alésage (2).

6. Dispositif selon la revendication 5, caractérisé en ce qu'il comporte trois nervures (9).

7. Dispositif selon l'une des revendications 1 à 6, caractérisé en ce que ladite nervure (9) se prolonge sur la face arrière de la pièce moulée (1) par une languette flexible.
